# EUROPEAN PATENT APPLICATION

(11) **EP 4 844 255 A1**
(43) Date of publication of application: **25.11.2026**
(21) Application number: 26179060.4
(22) Date of filing: 15.05.2026
(51) Int. Cl.: F16L 39/00, B64D 37/30, F01D 25/00, F02C 7/22, F16L 9/22, F16L 59/00, F16L 59/14

(54) **DOUBLE WALLED PIPING CARRYING HYDROGEN FUEL IN TURBINE ENGINES**

(30) Priority: 19.05.2025 US 202519212146
(71) Applicant: General Electric Company, Cincinnati, Ohio 45215 (US)
(72) Inventor: CALDERON GONZALEZ, Jose Luis, 76146 Querétaro (MX); SÁNCHEZ MORENO, Humberto, 76146 Querétaro (MX); BARRA RUIZ, Apolinario, 76146 Querétaro (MX)
(74) Representative: Openshaw & Co.

(57) **Abstract**

A double wall pipe (200) for carrying hydrogen fuel (1000) in a turbine engine (10) including an inner pipe (400) configured to carry the hydrogen fuel (1000), an outer pipe (402) that surrounds, at least partially, the inner pipe (400), the outer pipe (402) and the inner pipe (400) being spaced apart radially by a gap (1006) to define a sub-compartment therebetween to contain potentially leaked hydrogen fuel (1000) within the sub-compartment to prevent the leaked hydrogen fuel from spreading outside of the outer pipe (402), and a plurality of fittings (300, 300A, 300B, 300C) distributed along a length of the double wall pipe (200). The plurality of fittings (300, 300A, 300B, 300C) are configured to couple the inner pipe (400) and the outer pipe (402), and to operate as spacers to provide the gap (1006) between the inner pipe (400) and the outer pipe (402). A plurality of walls (402A, 402B) of the outer pipe (402) are configured to be coupled to each other and to the plurality of fittings (300, 300A, 300B, 300C) to, at least partially, enclose the inner pipe (400).

## Description

### TECHNICAL FIELD

The present disclosure relates generally to piping for transporting hydrogen fuel in turbine engines.

### BACKGROUND

The propulsion system for commercial aircraft typically includes one or more aircraft engines, such as turbine engines. These engines may be powered by aviation turbine fuel, which is, typically, a combustible hydrocarbon liquid fuel, such as a kerosene-type fuel, having a desired carbon number and carbon-to-hydrogen ratio. Such fuel produces carbon dioxide upon combustion, and improvements to reduce or to eliminate such carbon dioxide emissions in commercial aircraft are desired. Some engines may burn hydrogen (H₂) fuel in order to reduce or to eliminate carbon dioxide emissions.

### BRIEF DESCRIPTION OF THE DRAWINGS

Features and advantages will be apparent from the following, more particular, description of various embodiments, as illustrated in the accompanying drawings, wherein like reference numbers generally indicate identical, functionally similar, or structurally similar elements, or both.
FIG. 1 is a schematic, cross-sectional diagram of a turbine engine, taken along a longitudinal centerline axis of the turbine engine, according to an embodiment of the present disclosure.
FIG. 2 is a perspective view of the turbine engine having a fuel pipe, according to an embodiment of the present disclosure.
FIG. 3 is an enlarged, perspective view of the fuel pipe shown in FIG. 2, having a double wall pipe, according to an embodiment of the present disclosure.
FIG. 4 is an exploded view of the double wall pipe shown in FIG. 3, showing various components of the double wall pipe, according to an embodiment of the present disclosure.
FIG. 5A is a perspective view of a fitting used to couple an inner pipe of the double wall pipe to an outer pipe of the double wall pipe as shown in FIG. 4, the fitting having a plurality of ribs, according to an embodiment of the present disclosure.
FIG. 5B is a perspective view of a fitting used to couple an inner pipe of the double wall pipe to an outer pipe of the double wall pipe as shown in FIG. 4, the fitting having a membrane, according to another embodiment of the present disclosure.
FIG. 5C is a perspective view of a fitting used to couple an inner pipe of the double wall pipe to an outer pipe of the double wall pipe as shown in FIG. 4, the fitting having a stiffened membrane with a plurality of ribs, according to another embodiment of the present disclosure.
FIG. 5D is a perspective view of a fitting used to couple an inner pipe of the double wall pipe to an outer pipe of the double wall pipe as shown in FIG. 4, the fitting having a plurality of dampers, according to another embodiment of the present disclosure.
FIG. 6 is a zoomed-in perspective view of a first half wall and a second half wall of the outer pipe of the double wall pipe of the fuel pipe shown in FIG. 3, according to an embodiment of the present disclosure.
FIG. 7 is a zoomed-in perspective view of the outer pipe of the double wall pipe of the fuel pipe shown in FIG. 3, according to an embodiment of the present disclosure.
FIG. 8 is an elevational, cross-sectional view of a second portion of the outer pipe of the double wall pipe as shown in FIG. 4, according to an embodiment of the present disclosure.
FIG. 9 is an elevational, cross-sectional view of a joint assembly portion of the outer pipe of the double wall pipe as shown in FIG. 4 showing a secondary layer can be adaptative when needed by the internal envelope, according to an embodiment of the present disclosure.
FIG. 10 is an elevational, cross-sectional view of the double wall pipe shown in FIG. 4, having the inner pipe and the outer pipe showing an example use of the double wall pipe hydrogen fuel flow and ventilation system, according to an embodiment of the present disclosure.

### DETAILED DESCRIPTION

Features, advantages, and embodiments of the present disclosure are set forth or apparent from a consideration of the following detailed description, drawings, and claims. Moreover, both the foregoing summary of the present disclosure and the following detailed description are exemplary and intended to provide further explanation without limiting the scope of the disclosure as claimed.

Various embodiments of the present disclosure are discussed in detail below. While specific embodiments are discussed, this is done for illustration purposes only. A person skilled in the relevant art will recognize that other components and configurations may be used without departing from the present disclosure.

As used herein, the terms "first" and "second" may be used interchangeably to distinguish one component from another and are not intended to signify location or importance of the individual components.

The terms "upstream" and "downstream" refer to the relative direction with respect to fluid flow in a fluid pathway. For example, "upstream" refers to the direction from which the fluid flows, and "downstream" refers to the direction to which the fluid flows.

The terms "low" and "high," or their respective comparative degrees (e.g., "lower" and "higher," where applicable), when used with the compressor, turbine, shaft, or spool components, each refers to relative pressures or relative speeds, or both within an engine unless otherwise specified. For example, a "low-speed" component defines a component configured to operate at a rotational speed, such as a maximum allowable rotational speed, which is lower than that of a "high-speed" component of the engine. Alternatively, unless otherwise specified, the aforementioned terms may be understood in their superlative degree. For example, a "low-pressure turbine" may refer to the lowest maximum pressure within a turbine section, and a "high-pressure turbine" may refer to the highest maximum pressure within the turbine section. The terms "low" or "high" in such aforementioned regards may additionally, or alternatively, be understood as relative to minimum allowable speeds or pressures, or minimum or maximum allowable speeds or pressures relative to normal, desired, steady state, etc., operation of the engine, or any combination thereof.

The terms "coupled," "fixed," "attached," "connected," and the like, refer to both direct coupling, fixing, attaching, or connecting, as well as indirect coupling, fixing, attaching, or connecting through one or more intermediate components or features, unless otherwise specified herein.

The singular forms "a," "an," and "the" include plural references unless the context clearly dictates otherwise.

As used herein, the term "axial" refers to directions and orientations that extend substantially parallel to a longitudinal centerline of the turbine engine. Moreover, the terms "radial" and "radially" refer to directions and orientations that extend substantially perpendicular to the longitudinal centerline of the turbine engine. In addition, as used herein, the term "circumferentially" refers to directions and orientations that extend arcuately about the longitudinal centerline of the turbine engine.

Hydrogen (H₂) is the alternative fuel in evaluation in the global market to reduce carbon dioxide (CO₂) emissions from aerial and automotive vehicles, marine and gas turbines, and rockets. The existing rocket industry uses hydrogen as a propulsion system, and future commercial and military aviation engine programs are introducing hydrogen into the market.

To reduce carbon dioxide emissions from commercial aircraft, a hydrogen fuel may be used. Hydrogen fuel poses a number of challenges as compared to combustible hydrocarbon liquid fuel. For example, hydrogen fuel has a relatively low boiling point, and, in its gaseous form, hydrogen fuel has a much lower power density than combustible hydrocarbon liquid fuel. Hydrogen fuel, when in a gaseous form, also tends to seep through materials and attachment points between components without leaving residue. Hydrogen fuel is colorless and odorless. Hydrogen fuel is also highly reactive (relative to other fuels, such as Jet-A fuel) with a wide range of flammability limits. Hydrogen (H₂) fuel reacts with oxygen (O₂) to form water (H₂O) in an exothermic chemical reaction. Therefore, hydrogen fuel provides a source of clean energy. However, hydrogen fuel is more prone to leakage due to its molecular size and more prone to combustion than other liquid fuels, such as the kerosene fuel.

Hydrogen fuel provides a source of clean energy. However, hydrogen is a substance that is mostly feared for ignition (e.g., due to micro flames, deflagration, detonation) when the hydrogen fuel is in contact with high energy sources (e.g., temperature, electrical, kinetic). The hydrogen fuel is more prone to leakage due to its molecular size and more reactive with oxygen than other liquid fuels, such as the kerosene fuel.

Conventionally, double wall pipes are used to mitigate the risk of hydrogen leakage. However, these double wall pipes have only been proven to be effective in stationary environments. The use of double wall pipes in a dynamic environment for aerospace applications, such as in turbine engines where vibration is present, has proven to be challenging.

The present disclosure provides a double wall pipe for carrying and supplying liquid and/or gaseous hydrogen fuel. The double wall pipe has a removable protective secondary wall to provide a sub compartment under cowl doors of the turbine engine. The double wall pipe has an inner pipe and an outer pipe that surrounds the inner pipe. The outer pipe includes the removable protective secondary wall. The inner pipe and the outer pipe are spaced apart radially to define a sub-compartment therebetween. One purpose of the sub compartment is to prevent uncontrolled spreading of gaseous hydrogen fuel potentially leaked from the inner pipe. Another purpose of the sub-compartment is to contain a potential fire or detonation in case the hydrogen accidentally ignites. A further purpose of the sub-compartment is to act as a thermal controlled chamber. The secondary wall of the outer pipe includes lightweight shells that are assembled in a separable assembly using fittings that support the inner pipe and the outer pipe.

The inner pipe and the outer pipe receive a vibration input at the same time and at the same points, instead of the outer pipe receiving the vibration input and transmitting the vibration (minimized or amplified) to the inner pipe. In certain embodiments, the vibration input is applied to the inner pipe and the outer pipe essentially at the same time, at the same location, reducing the probability of a failure due to relative displacements and/or amplification between the inner and outer tube.

The secondary wall of the outer pipe can be removed for inspection. In addition, tight and complex geometries of the double wall pipe, including complex bends, can be shielded without the need to disassemble the inner pipe. Furthermore, the double wall pipe can be assembled in relatively fewer steps. In case of failure, the outer pipe or the inner pipe can be removed and or replaced, instead of replacing the whole assembly. As a result, repair can be accomplished in less time and using fewer parts. A weight of the double wall pipe can be reduced compared to conventional double wall pipes by using lightweight materials or even composites for the outer shell. The double wall pipe can be manufactured by conventional methods such as a bending machine, additive manufacturing, or three-dimensional printing, or any combination thereof. In an embodiment, the double wall pipe is configured to support vibrations induced during turbine engine operations. In addition, potential hydrogen leakage can be detected with the addition of one or more hydrogen detectors.

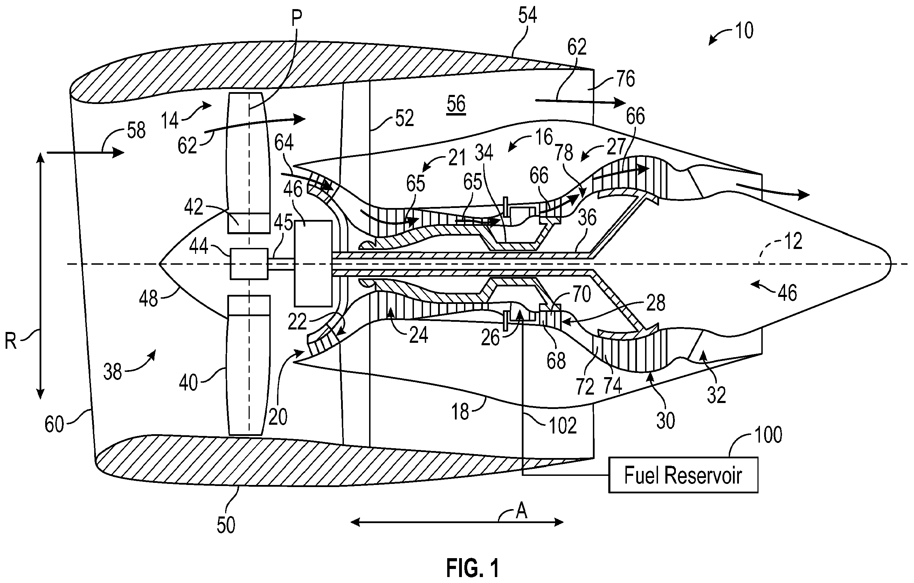

Referring now to the drawings, FIG. 1 is a schematic, cross-sectional diagram of a turbine engine 10, taken along a longitudinal centerline axis 12 of the turbine engine 10, according to an embodiment of the present disclosure. As shown in FIG. 1, the turbine engine 10 defines an axial direction A (extending parallel to the longitudinal centerline axis 12 provided for reference) and a radial direction R that is normal to the axial direction A. In general, the turbine engine 10 includes a fan section 14 and a turbo-engine 16 disposed downstream from the fan section 14.

The turbo-engine 16 depicted in FIG. 1 generally includes an outer casing 18 that is substantially tubular and defines an annular inlet 20. As schematically shown in FIG. 1, the outer casing 18 encases, in serial flow relationship, a compressor section 21 including a booster or a low-pressure (LP) compressor 22 followed downstream by a high-pressure (HP) compressor 24, a combustion section 26, a turbine section 27 including a high-pressure (HP) turbine 28 followed downstream by a low-pressure (LP) turbine 30, and a jet exhaust nozzle section 32. A high-pressure (HP) shaft 34 or a spool drivingly connects the HP turbine 28 to the HP compressor 24, to rotate the HP turbine 28 and the HP compressor 24 in unison. A low-pressure (LP) shaft 36 or a spool drivingly connects the LP turbine 30 to the LP compressor 22, to rotate the LP turbine 30 and the LP compressor 22 in unison. The compressor section 21, the combustion section 26, the turbine section 27, and the jet exhaust nozzle section 32 together define a core air flowpath.

For the embodiment depicted in FIG. 1, the fan section 14 includes a fan 38 (e.g., a variable pitch fan) having a plurality of fan blades 40 (airfoils) coupled to a disk 42 in a spaced apart manner. As depicted in FIG. 1, the fan blades 40 extend outwardly from the disk 42 generally along the radial direction R. Each fan blade 40 is rotatable relative to the disk 42 about a pitch axis P by virtue of the fan blades 40 being operatively coupled to an actuation member 44 configured to collectively vary the pitch of the fan blades 40 in unison. The fan blades 40, the disk 42, and the actuation member 44 are together rotatable about the longitudinal centerline axis 12 via a fan shaft 45 that is powered by the LP shaft 36 across a power gearbox, also referred to as a gearbox assembly 46. The gearbox assembly 46 is shown schematically in FIG. 1. The gearbox assembly 46 includes a plurality of gears for adjusting the rotational speed of the fan shaft 45 and, thus, the fan 38 relative to the LP shaft 36.

Referring still to the embodiment of FIG. 1, the disk 42 is covered by a rotatable fan hub 48 aerodynamically contoured to promote an airflow through the plurality of fan blades 40. In addition, the fan section 14 includes an annular fan casing or a nacelle 50 that circumferentially surrounds the fan 38 or at least a portion of the turbo-engine 16, or both. The nacelle 50 is supported relative to the turbo-engine 16 by a plurality of circumferentially spaced outlet guide vanes 52 (stator airfoils). Moreover, a downstream section 54 of the nacelle 50 extends over an outer portion of the turbo-engine 16 to define a bypass airflow passage 56 therebetween.

During operation of the turbine engine 10, a volume of air 58 enters the turbine engine 10 through an inlet 60 of the nacelle 50 or the fan section 14, or both. As the volume of air 58 passes across the fan blades 40 (rotating airfoils), a first portion of air 62 is directed or routed into the bypass airflow passage 56, and a second portion of air 64 is directed or is routed into the upstream section of the core air flowpath, or, more specifically, into the annular inlet 20 of the LP compressor 22. The ratio between the first portion of air 62 and the second portion of air 64 is commonly known as a bypass ratio. The pressure of the second portion of air 64 is then increased, generating compressed air 65, and the compressed air 65 is routed through the HP compressor 24 and into the combustion section 26, where the compressed air 65 is mixed with fuel and burned to generate combustion gases 66. The fuel can be a hydrogen (H₂) fuel. The fuel can be transported from a fuel reservoir 100 using a fuel pipe 102 to the combustion section 26.

The combustion gases 66 are routed into the HP turbine 28 and expanded through the HP turbine 28, where a portion of thermal or of kinetic energy, or both, from the combustion gases 66 is extracted via sequential stages of HP turbine stator vanes 68 (stator airfoils) that are coupled to the outer casing 18 and HP turbine rotor blades 70 (rotating airfoils) that are coupled to the HP shaft 34, thus, causing the HP shaft 34 to rotate, thereby supporting operation of the HP compressor 24. The combustion gases 66 are then routed into the LP turbine 30 and expanded through the LP turbine 30. Here, a second portion of the thermal energy and the kinetic energy is extracted from the combustion gases 66 via sequential stages of LP turbine stator vanes 72 (stator airfoils) that are coupled to the outer casing 18 and LP turbine rotor blades 74 (rotating airfoils) that are coupled to the LP shaft 36, thus, causing the LP shaft 36 to rotate, supporting operation of the LP compressor 22 and rotation of the fan 38 via the gearbox assembly 46.

The combustion gases 66 are subsequently routed through the jet exhaust nozzle section 32 of the turbo-engine 16 to provide propulsive thrust. Simultaneously, the pressure of the first portion of air 62 is substantially increased as the first portion of air 62 is routed through the bypass airflow passage 56 before being exhausted from a fan nozzle exhaust section 76 of the turbine engine 10, also providing propulsive thrust. The HP turbine 28, the LP turbine 30, and the jet exhaust nozzle section 32 at least partially define a hot gas path 78 for routing the combustion gases 66 through the turbo-engine 16.

The turbine engine 10 depicted in FIG. 1 is by way of example only. In other embodiments, the turbine engine 10 may have any other suitable configuration. For example, in other embodiments, the fan 38 may be configured in any other suitable manner (e.g., as a fixed pitch fan) and further may be supported using any other suitable fan frame configuration. Moreover, in other embodiments, any other suitable number or configuration of compressors, turbines, shafts, or a combination thereof may be provided. In still other embodiments, aspects of the present disclosure may be incorporated into any other suitable turbine engine, such as, for example, turbofan engines, propfan engines, turbojet engines, turboprop, or turboshaft engines.

The turbine engine 10 discussed herein is suitable for use on aircraft. Suitable aircraft include, for example, airplanes and unmanned aerial vehicles (UAV). In other embodiments, the turbine engine can be any other turbine engine, such as an industrial turbine engine incorporated into a power generation system, or a marine turbine engine on a ship or other vessel.

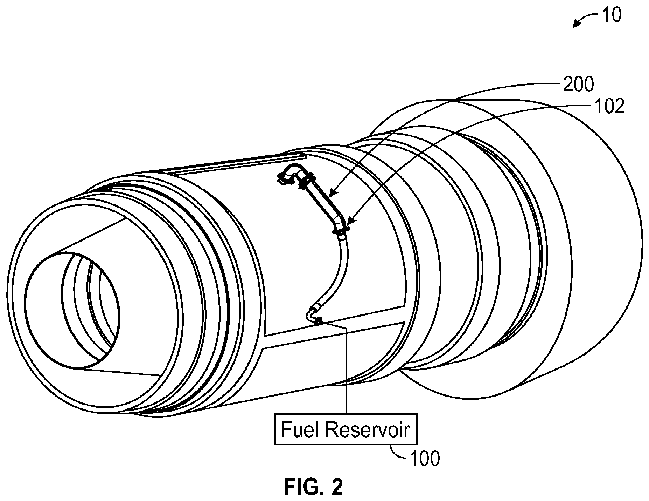

FIG. 2 is a perspective view of the turbine engine 10 having a fuel pipe 102, according to an embodiment of the present disclosure. The fuel pipe is used to carry (also referred herein to transport) hydrogen fuel from the fuel reservoir 100 to the combustion section 26 (shown in FIG. 1). The fuel pipe 102 includes a double wall pipe 200.

The fuel pipe 102, including the double wall pipe 200, can be mounted to a surface of the turbine engine 10. The double wall pipe 200 can prevent hydrogen that may leak from the inner pipe to outside the fuel pipe 102 to prevent ignition from sources (e.g., a thermal source or an electrical source) near the hydrogen fuel pipe 102. For example, the double wall pipe 200 is configured to contain leaked hydrogen fuel from misassembled seals in the inner pipe 201 carrying the hydrogen fuel. The double wall pipe 200 can also be configured to contain small inherent hydrogen fuel leaks from properly assembled seals or to contain leaks due to high cycle fatigue (HCF) failure in pipes induced by HCF engine vibration. The double wall pipe 200 can also be configured to contain leaks of hydrogen fuels from over pressure failures (e.g., accidental over pressurized hydrogen fuel within the inner pipe carrying the hydrogen fuel) and to contain leaks of hydrogen fuel at relatively high pressure as well as, potentially, a hydrogen explosion.

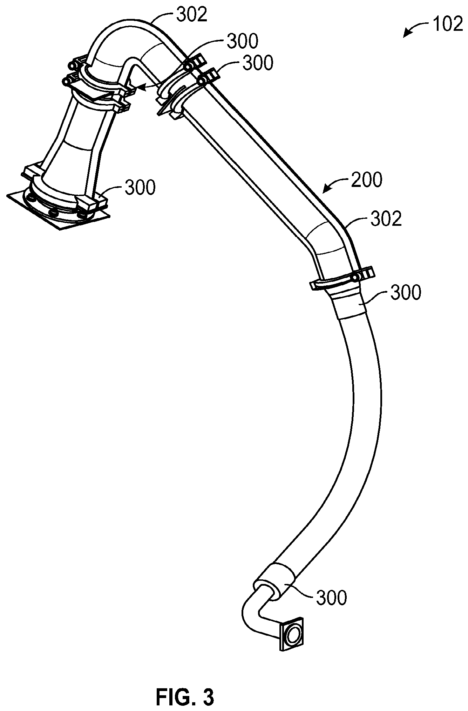

FIG. 3 is an enlarged, perspective view of the fuel pipe 102 shown in FIG. 2, having the double wall pipe 200, according to an embodiment of the present disclosure. The fuel pipe 102 includes the double wall pipe 200. The double wall pipe 200 is bent at various points 302 along the fuel pipe 102 to accommodate a shape of the nacelle 50 of the turbine engine 10 (shown in FIG. 1). As shown in FIG. 3, the double wall pipe 200 includes a plurality of fittings 300. As will be further described in the following paragraphs, the double wall pipe 200 includes an inner pipe and an outer pipe that are arranged such that the outer pipe surrounds at least partially the inner pipe. The outer pipe is spaced apart radially from the inner pipe. The plurality of fittings 300 are distributed along a length of the double wall pipe 200. The plurality of fittings 300 are used to connect various sections of the double wall pipe 200 to each other.

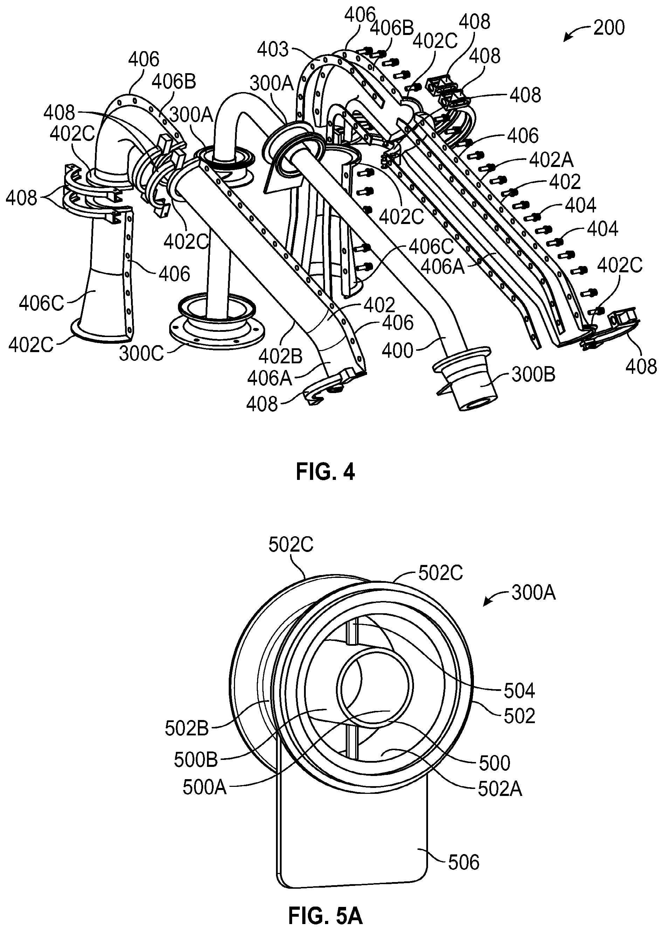

FIG. 4 is an exploded view of the double wall pipe 200 showing various components of the double wall pipe 200, according to an embodiment of the present disclosure. The double wall pipe 200 includes an inner pipe 400 and an outer pipe 402. The outer pipe 402 includes a plurality of walls that clamp to each other to form the outer pipe 402. In an embodiment, as shown in FIG. 4, the outer pipe 402 includes a first half wall 402A and a second half wall 402B. The plurality of fittings 300 also includes fittings 300A, 300B and 300C. The plurality of fittings 300A are distributed along a length of the double wall pipe 200. The fitting 300B is a connector that can be used to connect to the inner pipe 400 or to another pipe (not shown). The fitting 300C is a connector adapted to connect to the combustor (not shown) or to another component in the turbine engine 10 (shown in FIG. 2). The fittings 300 are used to couple the inner pipe 400 and the outer pipe 402. The fittings 300 also operate as spacers to define a gap between the inner pipe 400 and the outer pipe 402. The inner pipe 400 and the outer pipe 402 are spaced apart radially by the gap to define a sub-compartment therebetween. The first half wall 402A and the second half wall 402B are also configured to couple to the fittings 300, to enclose at least partially the inner pipe 400. The fittings 300 surround the inner pipe 400. A plurality of fasteners 404 are used to fasten a first half wall 402A of the outer pipe 402 to the second half wall 402B of the outer pipe 402.

In an embodiment, each of the first half wall 402A and the second half wall 402B of the outer pipe 402 include a plurality of longitudinal portions 406 that can be coupled to the plurality of fittings 300 using a plurality of clamps 408 to form the outer pipe 402.

In this embodiment, a seal member 403 is provided between the first half wall 402A and the second half wall 402B of the outer pipe 402. The seal member 403 is configured to seal the outer pipe 402 when the first half wall 402A is coupled to the second half wall 402B and to the plurality of fittings 300.

For example, as shown in FIG. 4, the plurality of longitudinal portions 406 of the outer pipe 402 includes a first longitudinal portion 406A, a second longitudinal portion 406B, and a third longitudinal portion 406C. The first longitudinal portion 406A is coupled to the second longitudinal portion 406B using the fitting 300A of the plurality of fittings 300 and a clamp of plurality of clamps 408. The second longitudinal portion 406B is coupled to third portion 406C using another fitting 300A of the plurality of fitting 300 and another clamp of the plurality of clamps 408. The first longitudinal portion 406A and the third longitudinal portion 406C are relatively straight, while the second longitudinal portion 406B is curved.

The outer pipe 402 also has extremities that are provided with flanges 402C. The flanges 402C are configured to mate to both the plurality of fittings 300 and to the plurality of clamps 408.

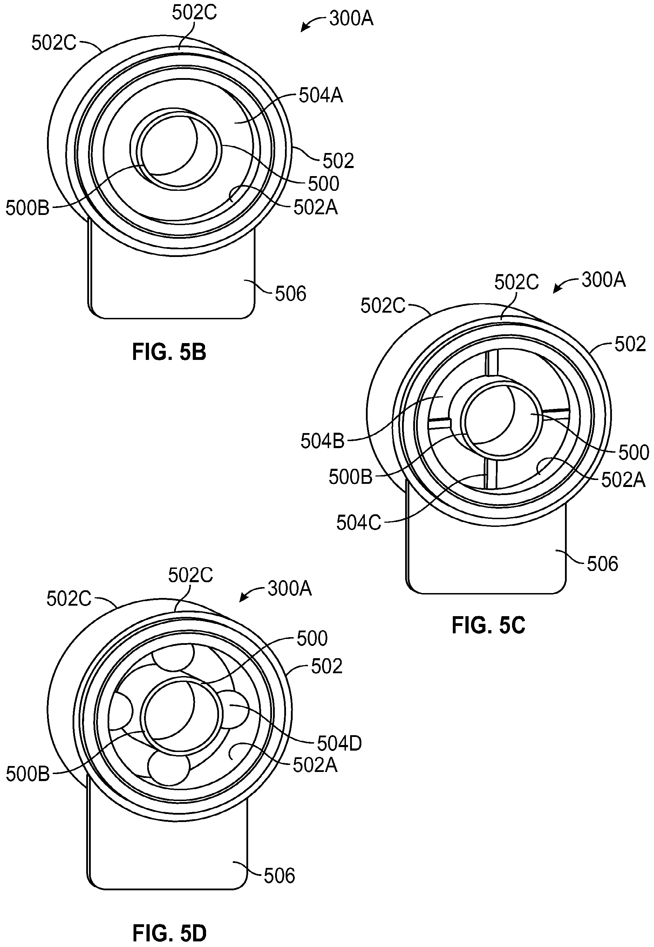

FIG. 5A is a perspective view of fitting 300A of the plurality of fittings 300 used to couple the inner pipe 400 to the outer pipe 402, according to an embodiment of the present disclosure. As shown in FIG. 5, the fitting 300A has an inner attachment ring 500 and an outer attachment ring 502. The inner attachment ring 500 is configured to mate with the inner pipe 400. The joint can be welded, brazed, slid, or bolted (shown in FIG. 4). The outer attachment ring 502 is configured to mate with the outer pipe 402. The inner attachment ring 500 is coupled to the outer attachment ring 502 using a plurality of ribs 504. In an embodiment, the plurality of ribs 504 are flexible members. A stiffness of the plurality of ribs 504 can be selected to optimize support of the inner pipe 400 and the outer pipe 402 for vibration dampening, and thermal expansion or contraction. For example, changing the stiffness shifts the resonance frequency of the plurality of ribs 504 to avoid the natural frequency of vibration during operation of the turbine engine 10. As shown in FIG. 5B, the plurality of ribs 504 can be replaced by a membrane 504A. As shown in FIG. 5C, the plurality of ribs 504 can be replaced by a stiffened membrane 504B with a plurality of ribs 504C. As shown in FIG. 5D, the plurality of ribs 504 can be replaced by a plurality of dampers 504D. In an embodiment, the inner attachment ring 500 has a cylindrical shape having an inner cylindrical surface 500A that is configured to contact the inner pipe 400 and an outer cylindrical surface 500B that is connected to the plurality of ribs 504.

In an embodiment, the outer attachment ring 502 has an inner cylindrical surface 502A that is connected to the plurality of ribs 504. The outer attachment ring 502 also has an outer surface 502B. The outer surface 502B has a curved shape (e.g., a U-shape or a V-shape). The outer surface 502B has two ridges 502C. The two ridges 502C are configured to mate with the flanges 402C of the outer pipe 402 and to mate with the clamps 408 (shown in FIG. 4).

The fitting 300A also includes a mounting feature 506 coupled to the outer attachment ring 502. The mounting feature 506 is configured to couple to a component of the turbine engine 10 directly or via a bracket (not shown). The mounting feature 506 can be coupled to the component of the turbine engine 10 (e.g., a surface of the turbine engine) to hold the double wall pipe 200. For example, the mounting feature 506 can be fastened (e.g., bolted, clamped, riveted, or threaded). A stiffness of the mounting feature 506 can be selected to optimize support of the inner pipe 400 and the outer pipe 402 (shown in FIG. 4) for vibration isolation of the inner pipe 400 and the outer pipe 402, and to allow for thermal expansion or contraction of the inner pipe 400 and the outer pipe 402. For example, selecting an appropriate stiffness (e.g., lowering the stiffness) shifts the resonance frequency of the mounting structure 506 to dampen vibrations at the outer pipe 402 that is coupled to a surface of the turbine engine 10 from being transmitted to the inner pipe 400, during operation of the turbine engine 10. Additional vibration isolation components, such as dampers, isolators, can also be springs, provided between the mounting feature 506 and the component of the turbine engine 10.

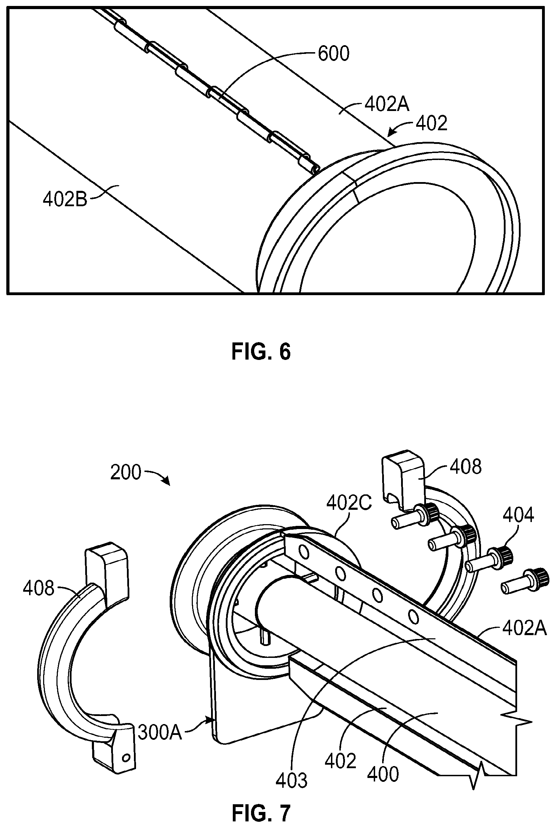

FIG. 6 is a zoomed-in perspective view of the first half wall 402A and the second half wall 402B of the outer pipe 402 of the double wall pipe 200 of the fuel pipe 102 shown in FIG. 3, according to an embodiment of the present disclosure. As shown in FIG. 6, instead of clamping the first half wall 402A and the second half wall 402B of the outer pipe 402 using clamps 408 (shown in FIG. 4) and fasteners 404, the first half wall 402A and the second half wall 402B are linked using a longitudinal link 600. The longitudinal link 600 can be a wire, a bolt, or the like. In an embodiment, the longitudinal link 600 can operate as a hinge enabling the first half wall 402A and the second half wall 402B to rotate relative to each other.

FIG. 7 is a zoomed-in perspective view of the outer pipe 402 of the double wall pipe 200 of the fuel pipe 102, according to an embodiment of the present disclosure. As shown in FIG. 7, the seal member 403 is provided between the first half wall 402A and the second half wall 402B of the outer pipe 402. The seal member 403 is configured to seal the outer pipe 402 when the first half wall 402A is coupled to the second half wall 402B. The seal member 403 runs along a longitudinal dimension of the double wall pipe 200. The plurality of fittings 300A are configured to seal the first half wall 402A and the second half wall 402B of the outer pipe 402 along the circumferential dimension of the outer pipe 402. The plurality of clamps 408 are used to clamp the fitting 300A to the flanges 402C of the first half wall 402A and the second half wall 402B of the outer pipe 402. The plurality of fasteners 404 are used to fasten the first half wall 402A of the outer pipe 402 to the second half wall 402B of the outer pipe 402. The first half wall 402A and the second half wall 402B of the outer pipe 402 can be made from a lightweight material (e.g., a metal, a composite, etc.) that can withstand hydrogen fuel pressure to reduce weight of the turbine engine 10. The term "lightweight material" of the outer pipe 402 is used herein to mean a lower-density material such that a density of the material of the outer pipe 402 is less than the density of the material of the inner pipe 400.

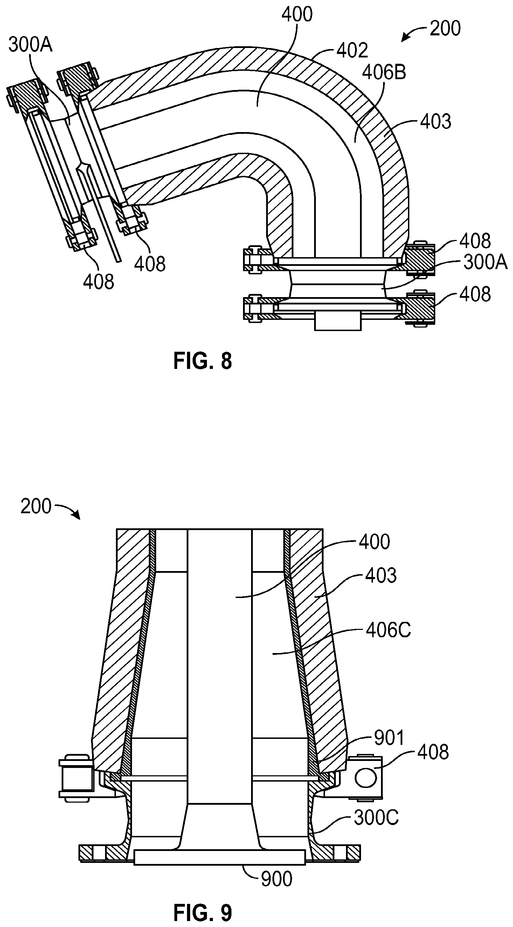

FIG. 8 is an elevational, cross-sectional view of the second longitudinal portion 406B of the outer pipe 402 of the double wall pipe 200, according to an embodiment of the present disclosure. FIG. 8 shows the second longitudinal portion 406B of the outer pipe 402 of the double wall pipe 200. The second longitudinal portion 406B can be connected to both the first longitudinal portion 406A and the third longitudinal portion 406C (shown in FIG. 4). For example, the second longitudinal portion 406B can be coupled to the first longitudinal portion 406A using the fitting 300A and a pair of the plurality of clamps 408. For example, the second longitudinal portion 406B can also be coupled to the third longitudinal portion 406C using another fitting 300A and another pair of the plurality of clamps 408. As shown in FIG. 8, the second portion 406B is curved and follows a curvature of a portion of the inner pipe 400. In this way, for example, tight geometry or a curved inner pipe can be shielded without the need of disassembling the inner pipe, thus minimizing potential leaks. The overall route of the outer pipe 402 can be made compact and close to the inner pipe 400 to follow the overall route of the inner pipe 400. In an embodiment, if needed, a spacer (e.g., a rubber spacer) can be installed between the inner pipe 400 and the outer pipe 402 to keep the inner pipe 400 and the outer pipe 402 spaced apart along the pipe route.

FIG. 9 is an elevational, cross-sectional view of the third longitudinal portion 406C of the outer pipe 402 of the double wall pipe 200, according to an embodiment of the present disclosure. As shown in FIG. 9, the third longitudinal portion 406C can be connected to other components in the turbine engine 10 using the fitting 300C. As shown in FIG. 9, a diameter of the third longitudinal portion 406C of the outer pipe 402 can be increased locally (e.g., at an extremity) to adapt to the fitting 300C for connection with the component of the turbine engine 10. For example, as shown in FIG. 9, the inner pipe 400 can be terminated with flange 900, and an end 901 of the outer pipe 402 and the fitting 300C can be made with a larger diameter to accommodate the flange 900 of the inner pipe 400. The diameter of the third longitudinal portion 406C of the outer pipe 402 can be increased near the fitting 300C to fit the fitting 300C and the flange 900 of the inner pipe 400.

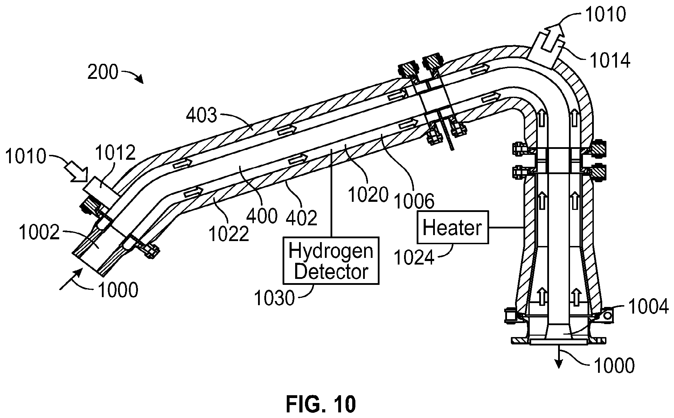

FIG. 10 is an elevational, cross-sectional view of the double wall pipe 200 having the inner pipe 400 and the outer pipe 402 showing an example use of the double wall pipe 200 for hydrogen fuel while providing ventilation flow, according to an embodiment of the present disclosure. For example, hydrogen fuel 1000 flows through the inner pipe 400 from one end 1002 of the inner pipe 400 to another end 1004 of the inner pipe 400. A leak of hydrogen fuel 1000 may, however, occur. As a result, a portion of the hydrogen fuel may leak into the gap 1006 between the inner pipe 400 and the outer pipe 402. To avoid accumulation of leaked hydrogen fuel within the gap 1006 (i.e., the sub-compartment) between the inner pipe 400 and the outer pipe 402, air, nitrogen, or inert gas 1010 is introduced into the gap 1006 to evacuate the leaked hydrogen fuel. For example, the air, the nitrogen, or the inert gas 1010 can be introduced through an inlet 1012 provided in the outer pipe 402. The air, the nitrogen, or the inert gas 1010 can flow within the gap 1006 to mix and to push or to flush out the leaked hydrogen fuel 1000 through outlet 1014 to evacuate the leaked hydrogen fuel. For example, as shown in FIG. 10, the outlet 1014 can be provided at the second longitudinal portion 406B (e.g., curved) of the outer pipe 402 where stagnation of leaked hydrogen fuel may occur. However, the inlet 1012 and the outlet 1014 can be provided spaced apart at any location along the outer pipe 402. A hydrogen fuel detector 1030 can be provided at the outlet 1014 to monitor in real-time the presence of hydrogen. Thus, the hydrogen fuel detector 1030 can activate an alarm to the cabin when an unwanted hydrogen leakage is detected.

In an embodiment, an ice mitigation system can be provided to prevent accumulation of ice on the double wall pipe 200. The ice mitigation system can be, for example, an insulation layer or a coating. The insulation layer or the coating can be provided on an interior surface 1020 or on an exterior surface 1022 of the outer pipe 402 to insulate the double wall pipe 200 from external cold temperature. In an embodiment, a heater 1024 may also be used to heat the exterior surface 1022 of the outer pipe 402 to prevent accumulation of ice on the exterior surface 1022 of the outer pipe 402.

In an embodiment, the hydrogen fuel detector 1030 can be placed in the gap 1006 between the inner pipe 400 and the outer pipe or can be placed in the outer pipe 402. The hydrogen fuel detector 1030 can be configured to detect an amount of hydrogen fuel that may have leaked into the gap 1006. For example, a warning signal can be transmitted by the hydrogen fuel detector 1030 to indicate and to warn of excessive amount of hydrogen leakage within the gap 1006. The hydrogen fuel detector 1030 can measure an amount of hydrogen detected such that it only triggers a warning signal if the detected amount exceeds a threshold amount set to be excessive.

The double wall pipe 200 can be used to prevent uncontrolled spreading of gaseous hydrogen potentially leaked from the inner pipe 400. The outer pipe 402 can also be used to contain a potential fire in case the hydrogen accidentally ignites. The outer pipe 402 can be constructed of lightweight shells that are assembled using fittings 300 to support the inner pipe 400 and the outer pipe 402. The term "lightweight shells" is used herein to mean that a density of the material of the outer pipe 402 is less than a density of the material of the inner pipe 400. For example, as shown in FIG. 4, the outer pipe 402 includes the first half wall 402A corresponding to a first lightweight shell and the second half wall 402B corresponding to a second lightweight shell.

The inner pipe 400 and the outer pipe 402 can be configured to receive a vibration input at the same time and at the same points, instead of the outer pipe 402 receiving the vibration input and transmitting the vibration (minimized or amplified) to the inner pipe 400. In some embodiments, a vibration input is applied to the inner pipe 400 and the outer pipe 402, substantially simultaneously, at the same location reducing the probability of a failure due to relative displacements and/or amplification between the inner pipe 400 and outer pipe 402.

The outer pipe 402 can be removed for inspection. In addition, the double wall pipe 200 may have tight and complex geometries, including complex bends that can be shielded without the need of disassembling the inner pipe 400. Furthermore, the double wall pipe 200 can be assembled with fewer or no special assembly sequence.

In case of failure, the inner pipe 400 or the outer pipe 402 can be removed and or replaced avoiding replacing the whole assembly. As a result, repair can be accomplished in less time and using fewer parts. The double wall pipe 200 can be manufactured by additive manufacturing or three-dimensional printing, or both. The double wall pipe 200 is configured to support vibrations induced during operation of the turbine engine 10.

The inner pipe and the outer pipe receive a vibration input at the same time and at the same points, instead of the outer pipe receiving the vibration input and transmitting the vibration (minimized or amplified) to the inner pipe. In some embodiments, the vibration input is applied to the inner pipe and the outer pipe substantially at the same time, at the same location, reducing the probability of a failure due to relative displacements and/or amplification between the inner and outer tube.

The secondary wall of the outer pipe can be removed for inspection. In addition, tight and complex geometries of the double wall pipe, including complex bends, can be shielded without the need of disassembling the inner pipe. Furthermore, the double wall pipe can be assembled with few or no special assembly sequence. In case of failure, the outer pipe or the inner pipe can be removed and or replaced, instead of replacing the whole assembly. As a result, repair can be accomplished in less time and using fewer parts. A weight of the double wall pipe can be reduced compared to conventional double wall pipes by using lightweight materials or even composites for the outer shell (e.g., a density of the material of the outer shell or outer pipe is less than a density of the material of the inner pipe). The double wall pipe can be manufactured by conventional methods such as a bending machine, additive manufacturing, or three-dimensional printing, or any combination thereof. In an embodiment, the double wall pipe is configured to support vibrations induced during turbine engine operations. In addition, potential hydrogen leakage can be detected with the addition of one or more hydrogen detectors.

Further aspects are provided by the subject matter of the following clauses.

A double wall pipe for carrying hydrogen fuel in a turbine engine, the double wall pipe including an inner pipe configured to carry the hydrogen fuel, an outer pipe having a plurality of walls that surround, at least partially, the inner pipe, the outer pipe and the inner pipe being spaced apart radially by a gap to define a sub-compartment therebetween to contain potentially leaked hydrogen fuel from the inner pipe within the sub-compartment to prevent the leaked hydrogen fuel from spreading outside of the outer pipe, and a plurality of fittings distributed along a length of the double wall pipe, the plurality of fittings being configured to couple the inner pipe and the outer pipe, and to operate as spacers to provide the gap between the inner pipe and the outer pipe. The plurality of walls of the outer pipe are configured to be coupled to each other and to the plurality of fittings to enclose at least partially the inner pipe.

A double wall pipe for carrying hydrogen fuel in a turbine engine, the double wall pipe comprising: an inner pipe configured to carry the hydrogen fuel; an outer pipe having a plurality of walls that at least partially surround the inner pipe, the outer pipe and the inner pipe being spaced apart radially by a gap to define a sub-compartment therebetween to contain potentially leaked hydrogen fuel from the inner pipe within the sub-compartment to prevent the leaked hydrogen fuel from spreading outside of the outer pipe; and a plurality of fittings distributed along a length of the double wall pipe, the plurality of fittings being configured to couple the inner pipe and the outer pipe, and to operate as spacers to provide the gap between the inner pipe and the outer pipe, wherein the plurality of walls of the outer pipe are configured to be coupled to each other and to the plurality of fittings, at least partially, to enclose the inner pipe.

The double wall pipe of the preceding clause, wherein the plurality of fittings are configured to couple and to surround the inner pipe.

The double wall pipe of the preceding clause, wherein the plurality of walls of the outer pipe are made of lightweight material to reduce weight of the turbine engine.

The double wall pipe of any preceding clause, further including a plurality of fasteners configured to fasten the plurality of walls of the outer pipe to each other.

The double wall pipe of the preceding clause, further including a seal member configured to seal the outer pipe when the plurality of walls of the outer pipe are coupled to each other and to the plurality of fittings.

The double wall pipe of any preceding clause, wherein the plurality of fittings are configured to seal the plurality of walls of the outer pipe along a circumferential dimension of the outer pipe.

The double wall pipe of any preceding clause, further including a longitudinal link, configured to link the plurality of walls of the outer pipe to each other.

The double wall pipe of any preceding clause, wherein the inner pipe terminates with a flange, and an end of the outer pipe and a fitting of the plurality of fitting are provided with a larger diameter to accommodate the flange of the inner pipe.

The double wall pipe of any preceding clause, wherein the outer pipe includes an inlet for introducing air or an inert gas to flush out leaked hydrogen fuel leaked into the sub-compartment between the inner pipe and the outer pipe, and an outlet spaced apart from the inlet to evacuate the leaked hydrogen fuel with the air or the inert gas.

The double wall pipe of any preceding clause, further including a plurality of clamps, wherein each of the plurality of walls includes a plurality of longitudinal portions coupled to each other using the plurality of clamps.

The double wall pipe of any preceding clause, wherein one or more of the plurality of longitudinal portions is curved.

The double wall pipe of any preceding clause, wherein the outer pipe includes an ice mitigation component to prevent accumulation of ice.

The double wall pipe of the preceding clause, wherein the ice mitigation component includes an insulation layer or coating provided in an interior surface or on an exterior surface of the outer pipe.

The double wall pipe of any preceding clause, further including a hydrogen fuel detector in the gap between the inner pipe and the outer pipe, the hydrogen fuel detector configured to detect an amount of the hydrogen fuel that leaked into the sub-compartment.

The double wall pipe of any preceding clause, wherein a fitting of the plurality of fittings includes an inner attachment ring and an outer attachment ring, the inner attachment ring being configured to mate with the inner pipe.

The double wall pipe of the preceding clause, wherein the outer attachment ring is configured to mate with the outer pipe, wherein the inner attachment ring is coupled to the outer attachment ring using a plurality of ribs.

The double wall pipe of any preceding clause, wherein the plurality of ribs are flexible members, and a stiffness of the plurality of ribs can be selected to optimize support of the inner pipe and the outer pipe for vibration dampening and thermal expansion or contraction.

The double wall pipe of any preceding clause, wherein the inner attachment ring has a cylindrical shape having an inner cylindrical surface that is configured to contact the inner pipe, and an outer cylindrical surface that is connected to the plurality of ribs.

The double wall pipe of any preceding clause, wherein the outer attachment ring has an inner cylindrical surface that is connected to the plurality of ribs, and an outer surface having a curved shape and a plurality of ridges.

The double wall pipe of any preceding clause, wherein the plurality of ridges are configured to mate with flanges of the outer pipe and to mate with a plurality of clamps.

The double wall pipe of any preceding clause, wherein the fitting further includes a mounting feature coupled to the outer attachment ring, the mounting feature being configured to couple to a component of the turbine engine.

The double wall pipe of any preceding clause, wherein the mounting feature is configured to be fastened to the component to hold the double wall pipe.

The double wall pipe of any preceding clause, further including vibration isolation components disposed between the mounting feature and the component of the turbine engine.

The double wall pipe of any preceding clause, wherein a stiffness of the mounting feature is selected to optimize support of the inner pipe and the outer pipe to isolate the inner pipe and the outer pipe from vibration isolation, and to allow for thermal expansion or contraction of the inner pipe and the outer pipe.

A turbine engine including a double wall pipe for carrying hydrogen fuel. The double wall pipe includes an inner pipe configured to carry the hydrogen fuel, an outer pipe having a plurality of walls that surround, at least partially, the inner pipe, the outer pipe and the inner pipe being spaced apart radially by a gap to define a sub-compartment therebetween to contain potentially leaked hydrogen fuel from the inner pipe within the sub-compartment to prevent the leaked hydrogen fuel from spreading outside of the outer pipe, and a plurality of fittings distributed along a length of the double wall pipe, the plurality of fittings being configured to couple the inner pipe and the outer pipe, and to operate as spacers to provide the gap between the inner pipe and the outer pipe. The plurality of walls of the outer pipe are configured to be coupled to each other and to the plurality of fittings to enclose at least partially the inner pipe.

A turbine engine comprising a double wall pipe for carrying hydrogen fuel, the double wall pipe comprising: an inner pipe configured to carry the hydrogen fuel; an outer pipe having a plurality of walls that surround, at least partially, the inner pipe, the outer pipe and the inner pipe being spaced apart radially by a gap to define a sub-compartment therebetween to contain potentially leaked hydrogen fuel from the inner pipe within the sub-compartment to prevent the leaked hydrogen fuel from spreading outside of the outer pipe; and a plurality of fittings distributed along a length of the double wall pipe, the plurality of fittings being configured to couple the inner pipe and the outer pipe, and to operate as spacers to provide the gap between the inner pipe and the outer pipe, wherein the plurality of walls of the outer pipe are configured to be coupled to each other and to the plurality of fittings, at least partially, to enclose the inner pipe.

The turbine engine of the preceding clause, wherein the plurality of fittings are configured to couple and to surround the inner pipe.

The turbine engine of the preceding clause, wherein the plurality of walls of the outer pipe are made of lightweight material to reduce weight of the turbine engine.

The turbine engine of any preceding clause, further including a plurality of fasteners configured to fasten the plurality of walls of the outer pipe to each other.

The turbine engine of the preceding clause, wherein the double wall pipe further includes a seal member configured to seal the outer pipe when the plurality of walls of the outer pipe are coupled to each other and to the plurality of fittings.

The turbine engine of any preceding clause, wherein the plurality of fittings are configured to seal the plurality of walls of the outer pipe along a circumferential dimension of the outer pipe.

The turbine engine of any preceding clause, wherein the double wall pipe further includes a longitudinal link, configured to link the plurality of walls of the outer pipe to each other.

The turbine engine of any preceding clause, wherein the inner pipe terminates with a flange, and an end of the outer pipe and a fitting of the plurality of fitting are provided with a larger diameter to accommodate the flange of the inner pipe.

The turbine engine of any preceding clause, wherein the outer pipe includes an inlet for introducing air or an inert gas to flush out leaked hydrogen fuel leaked into the sub-compartment between the inner pipe and the outer pipe, and an outlet spaced apart from the inlet to evacuate the leaked hydrogen fuel with the air or the inert gas.

The turbine engine of any preceding clause, wherein the double wall pipe further includes a plurality of clamps, wherein each of the plurality of walls includes a plurality of longitudinal portions coupled to each other using the plurality of clamps.

The turbine engine of any preceding clause, wherein one or more of the plurality of longitudinal portions is curved.

The turbine engine of any preceding clause, wherein the outer pipe includes an ice mitigation component to prevent accumulation of ice.

The turbine engine of the preceding clause, wherein the ice mitigation component includes an insulation layer or coating provided in an interior surface or on an exterior surface of the outer pipe.

The turbine engine of any preceding clause, wherein the double wall pipe further includes a hydrogen fuel detector in the gap between the inner pipe and the outer pipe, the hydrogen fuel detector configured to detect an amount of the hydrogen fuel that leaked into the sub-compartment.

The turbine engine of any preceding clause, wherein a fitting of the plurality of fittings includes an inner attachment ring and an outer attachment ring, the inner attachment ring being configured to mate with the inner pipe.

The turbine engine of the preceding clause, wherein the outer attachment ring is configured to mate with the outer pipe, wherein the inner attachment ring is coupled to the outer attachment ring using a plurality of ribs.

The turbine engine of any preceding clause, wherein the plurality of ribs are flexible members, and a stiffness of the plurality of ribs can be selected to optimize support of the inner pipe and the outer pipe for vibration dampening and thermal expansion or contraction.

The turbine engine of any preceding clause, wherein the inner attachment ring has a cylindrical shape having an inner cylindrical surface that is configured to contact the inner pipe, and an outer cylindrical surface that is connected to the plurality of ribs.

The turbine engine of any preceding clause, wherein the outer attachment ring has an inner cylindrical surface that is connected to the plurality of ribs, and an outer surface having a curved shape and a plurality of ridges.

The turbine engine of any preceding clause, wherein the plurality of ridges are configured to mate with flanges of the outer pipe and to mate with a plurality of clamps.

The turbine engine of any preceding clause, wherein the fitting further includes a mounting feature coupled to the outer attachment ring, the mounting feature being configured to couple to a component of the turbine engine.

The turbine engine of any preceding clause, wherein the mounting feature is configured to be fastened to the component to hold the double wall pipe.

The turbine engine of any preceding clause, wherein the double wall pipe further includes vibration isolation components disposed between the mounting feature and the component of the turbine engine.

The turbine engine of any preceding clause, wherein a stiffness of the mounting feature is selected to optimize support of the inner pipe and the outer pipe to isolate the inner pipe and the outer pipe from vibration isolation, and to allow for thermal expansion or contraction of the inner pipe and the outer pipe.

Although the foregoing description is directed to some embodiments of the present disclosure, other variations and modifications will be apparent to those skilled in the art and may be made without departing from the disclosure. Moreover, features described in connection with one embodiment of the present disclosure may be used in conjunction with other embodiments, even if not explicitly stated above.

## Claims

1. A double wall pipe (200) for carrying hydrogen fuel (1000) in a turbine engine (10), the double wall pipe (200) comprising:
an inner pipe (400) configured to carry the hydrogen fuel (1000);
an outer pipe (402) having a plurality of walls (402A, 402B) that surround, at least partially, the inner pipe (400), the outer pipe (402) and the inner pipe (400) being spaced apart radially by a gap (1006) to define a sub-compartment therebetween to contain potentially leaked hydrogen fuel (1000) within the sub-compartment to prevent the leaked hydrogen fuel from spreading outside of the outer pipe (402); and
a plurality of fittings (300, 300A, 300B, 300C) distributed along a length of the double wall pipe (200), the plurality of fittings (300, 300A, 300B, 300C) being configured to couple the inner pipe (400) and the outer pipe (402), and to operate as spacers to provide the gap (1006) between the inner pipe (400) and the outer pipe (402),
wherein the plurality of walls (402A, 402B) of the outer pipe (402) are configured to be coupled to each other and to the plurality of fittings (300, 300A, 300B, 300C) to, at least partially, enclose the inner pipe (400).

2. The double wall pipe (200) of claim 1, wherein the plurality of fittings (300, 300A, 300B, 300C) are configured to couple and to surround the inner pipe (400), and the plurality of walls (402A, 402B) of the outer pipe (402) are made of lightweight material to reduce weight of the turbine engine (10).

3. The double wall pipe (200) of any preceding claim, further comprising a plurality of fasteners (404) configured to fasten the plurality of walls (402A, 402B) of the outer pipe (402) to each other, and a seal member (403) configured to seal the outer pipe (402) when the plurality of walls (402A, 402B) of the outer pipe (402) are coupled to each other and to the plurality of fittings (300, 300A, 300B, 300C), and optionally, the plurality of fittings (300, 300A, 300B, 300C) are configured to seal the plurality of walls (402A, 402B) of the outer pipe (402) along a circumferential dimension of the outer pipe (402).

4. The double wall pipe (200) of any preceding claim, further comprising a longitudinal link (600), configured to link the plurality of walls (402A, 402B) of the outer pipe (402) to each other.

5. The double wall pipe (200) of any preceding claim, wherein the inner pipe (400) terminates with a flange (402C, 900), and an end (901, 1002, 1004) of the outer pipe (402) and a fitting (300, 300A, 300B, 300C) of the plurality of fittings (300, 300A, 300B, 300C) are provided with a larger diameter to accommodate the flange (402C, 900) of the inner pipe (400).

6. The double wall pipe (200) of any preceding claim, wherein the outer pipe (402) comprises an inlet (1012) for introducing air or an inert gas (1010) to flush out leaked hydrogen fuel (1000) leaked into the sub-compartment between the inner pipe (400) and the outer pipe (402), and an outlet (1014) spaced apart from the inlet (1012) to evacuate the leaked hydrogen fuel (1000) with the air or the inert gas (1010).

7. The double wall pipe (200) of any preceding claim, further comprising a plurality of clamps (408), wherein each of the plurality of walls (402A, 402B) includes a plurality of longitudinal portions (406) coupled to each other using the plurality of clamps (408), and optionally, one or more of the plurality of longitudinal portions (406) is curved.

8. The double wall pipe (200) of any preceding claim, wherein the outer pipe (402) includes an ice mitigation component to prevent accumulation of ice, wherein the ice mitigation component includes an insulation layer or coating provided in an interior surface (1020) or on an exterior surface (1022) of the outer pipe (402), and optionally, a hydrogen fuel detector (1030) in the gap (1006) between the inner pipe (400) and the outer pipe (402), the hydrogen fuel detector (1030) configured to detect an amount of the hydrogen fuel (1000) that leaked into the sub-compartment defined by the gap (1006).

9. The double wall pipe (200) of any preceding claim, wherein a fitting (300, 300A, 300B, 300C) of the plurality of fittings (300, 300A, 300B, 300C) comprises an inner attachment ring (500) and an outer attachment ring (502), the inner attachment ring (500) being configured to mate with the inner pipe (400), and the outer attachment ring (502) being configured to mate with the outer pipe (402), wherein the inner attachment ring (500) is coupled to the outer attachment ring (502) using a plurality of ribs (504).

10. The double wall pipe (200) of claim 9, wherein the plurality of ribs (504) are flexible members, and a stiffness of the plurality of ribs (504) can be selected to optimize support of the inner pipe (400) and the outer pipe (402) for vibration dampening and thermal expansion or contraction.

11. The double wall pipe (200) of claim 9, wherein the inner attachment ring (500) has a cylindrical shape having an inner cylindrical surface (500A) that is configured to contact the inner pipe (400), and an outer cylindrical surface (500B) that is connected to the plurality of ribs (504).

12. The double wall pipe (200) of claim 9, wherein the outer attachment ring (502) has an inner cylindrical surface (502A) that is connected to the plurality of ribs (504), and an outer surface (502B) having a curved shape and a plurality of ridges (502C), and optionally, the plurality of ridges (502C) are configured to mate with flanges (402C, 900) of the outer pipe (402) and to mate with a plurality of clamps (408).

13. The double wall pipe (200) of claim 9, wherein the fitting (300, 300A, 300B, 300C) further includes a mounting feature (506) coupled to the outer attachment ring (502), the mounting feature being configured to couple to a component of the turbine engine (10), and optionally, the mounting feature (506) is configured to be fastened to the component to hold the double wall pipe (200).

14. The double wall pipe (200) of claim 13, further comprising vibration isolation components disposed between the mounting feature (506) and the component of the turbine engine (10), wherein a stiffness of the mounting feature (506) is selected to optimize support of the inner pipe (400) and the outer pipe (402) to isolate the inner pipe (400) and the outer pipe (402) from vibration isolation, and to allow for thermal expansion or contraction of the inner pipe (400) and the outer pipe (402).

15. A turbine engine (10) comprising the double wall pipe (200) of any preceding claim.
